# EUROPEAN PATENT APPLICATION

(11) **EP 1 677 008 A1**
(43) Date of publication of application: **05.07.2006**
(21) Application number: 05258081.8
(22) Date of filing: 28.12.2005
(51) Int. Cl.: F04D 9/00, A01K 63/04

(54) **Pond pump units**

(30) Priority: 31.12.2004 GB 0428562
(71) Applicant: Hozelock Limited, Aylesbury, Buckinghamshire HP19 8SU (GB)
(72) Inventor: Patel, Kaushik Ishwarbhai, Northwood, Middlesex HA6 1QJ (GB)
(74) Representative: Faulkner, Thomas John

(57) **Abstract**

An out of pond, pond filter unit for filtering pond water whilst allowing the pump 2 and filter 5,6,7 to remain out of (and above) the water to be processed. The unit has a container 1 including a reservoir portion to allow priming of the unit. A changeover valve 3 allows switching between a normal running state and a primary state.

## Description

This invention relates to pond pump units, in particular pump units which are arranged to operate when disposed outside of a pond and typically which also include one or more kind of filter.

To date pond filter systems have typically comprised a pump in the pond and a filter disposed externally. This can make installation a complex task and if the filter includes an ultraviolet filter element two sets of power cables have to be wired up.

In an alternative approach gravity fed systems can be set up but these require an outlet from the pond below water level (usually at the bottom of the pond) that allows water to flow into the filter system under gravity. In such systems a pump can be used after the filter to pump water back up to the pond. A disadvantage of this approach is the difficulty of providing the gravity feed to the filter and the lack of flexibility as to where the filter can be sited. In essence such a filter needs to be not too far away from the pond and provided at the same level as the pond.

There is an attraction to having a system in which as few components as possible are placed in the pond as this leads to simpler and less intimidating installation for the user and can ease consumer concerns about placing electrical equipment under water.

US 4,490,250 describes an aquarium filtering system which has a priming function. However, that device operates by having the pump in the body of water (tank) which is to be pumped and filtered. It does not include any type of reservoir for priming and could not function if the pump was not in the body of water to be pumped. It is not suitable for "out of pond" use. It also is made to be supported on the edge of an aquarium and is intrinsically unsuited for use with a pond.

It is an aim of the present invention to provide a pump unit which addresses at least some of the drawbacks of the prior art.

According to one aspect of the present invention there is provided a pond pump unit arranged to operate when disposed out of a pond and comprising, a container for pond water having an inlet and an outlet, and a pump for drawing pond water into the inlet and driving pond water out of the outlet.

The pond pump unit may comprise changeover valve means for controlling the effect of operation of the pump. The changeover valve means may have a priming state and a normal operation state.

The changeover valve means may be arranged so that when the changeover valve means is in the priming state, an inlet to the pump is connected to the interior of the container so that the pump is operable to pump water out of the container via the container outlet. In this priming state, fluid, typically air and pond water, may be drawn into the container via the container inlet by virtue of the suction created by pumping water out of the container. In the priming state, an outlet of the pump may be connected via a flow passageway to the outlet of the container.

The changeover valve means may be arranged so that when the changeover valve means is in the normal operation state, an inlet to the pump is connected via a flow passageway to the inlet of the container so that the pump is operable to pump water into the container via the container inlet. In this normal operation state, fluid, typically pond water and perhaps some air, may be driven out of the container via the container outlet. In the normal operation state, an outlet of the pump may be connected to the interior of the container, so that flow out of the pump passes through the main volume of the container.

Here the expression flow passageway is used to distinguish from the position where there is a connection between, say, the inlet of the pump and the inlet of container, via a main volume of the container. Such a passageway may comprise a short internal passage in say, the changeover valve, and/or comprise passages provided by pipes, valves, and other intermediate components. The idea is that such a passage way provides what might be considered a direct or dedicated flow path.

The pump unit may comprise a priming inlet tube portion which at least partially defines a flow passageway from a region at a base of the container to the pump for use in supplying pond water from the container to the pump when the valve means is in the priming state.

The changeover valve means may be manually operable. The changeover valve means may be automatically operable. Where an automatically operable changeover valve means is provided, this may switch between the priming state and normal operation state in dependence on one or more of: the characteristic of flow from the container inlet -eg the detection of pond water flow rather than air flow, the water level in the container and the pressure in the container.

The container may be sealed, in operation, against the escape of water from the container. This can allow a pressurised system to be used.

The pump may be disposed within the container.

The container may comprise a reservoir portion from which water is pumped when the changeover valve means is in priming state.

The pond pump unit may be a pond pump filter unit in which at least one filter means is provided in the container. The container may house at a mechanical filter. The container may house a biological filter. The container may house an ultra violet filter. The electrical components of the pump and the ultra violet filter may be housed in a common waterproof housing. A single power supply lead may be provided to the electrical components of the pump and the ultra violet filter. Thus a single power supply lead may be provided to the common waterproof housing.

Although it is less preferred, the pump may be a self-priming pump. Such pumps are generally more expensive to buy and run. The use of a self-priming pump can remove the need for any priming operation/features.

According to another aspect of the invention there is provided a method of operating a pond pump unit of the type defined above where the container inlet is connected to a pond via a supply hose, the method comprising the steps of filling the container with water, setting the changeover valve to the priming state, operating the pump to pump water out of the container at least until air in the supply hose has been pumped out of the hose and into the container, and then setting the changeover valve to the normal operating state.

According to another aspect of the invention there is provided a pond installation comprising a pond and a pond pump unit as defined above disposed externally to the pond and arranged to extract water from the pond and return water to the pond without relying on a gravity feed.

According to yet another aspect of the invention there is provided a method of circulating water from a pond comprising the step of using a pond pump unit as defined above, without relying on a gravity feed.

In general the optional features described in relation to the first aspect of the invention are equally applicable for use with these other aspects of the invention.

Embodiments of the present invention will now be described, by way of example only, with reference to the accompanying drawings in which:-
Figure 1 schematically shows a pond pump filter unit;
Figure 2A schematically shows part of the pond pump filter unit of Figure 1 with a changeover valve in a priming position; and
Figure 2B schematically shows the same parts of the pond pump filter unit as shown in Figure 2A but with the changeover valve in a normal operation (or running) position.

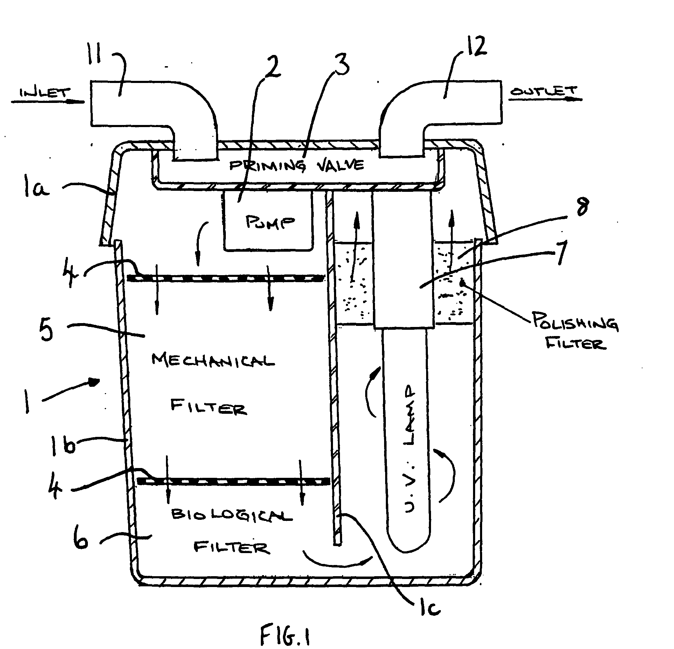

Figure 1 shows a pond pump filter unit which is arranged to be operable when disposed outside of a pond. It is also arranged to be operable without being gravity fed with water from the pond. The pond pump filter unit generally comprises a container 1 formed of two parts 1a and 1b which are separable from one another for installation and maintenance but can be mounted to one another in the position shown in Figure 1 so as to provide a sealed container. The container further comprises a pond water inlet 11 and a pond water outlet 12. In normal use a respective length of hose (not shown) will be connected to each of the hose inlet 11 and hose outlet 12 in order to respectively draw water from a pond for filtering in the pond pump filter unit and for returning the filtered water back to the pond.

In the present embodiment the container 1 is generally circular in cross section in a direction perpendicular to the section shown in Figure 1 and thus the container 1 as a whole is cylindrical or barrel shaped. However, in other embodiments the container 1 may be of other shapes.

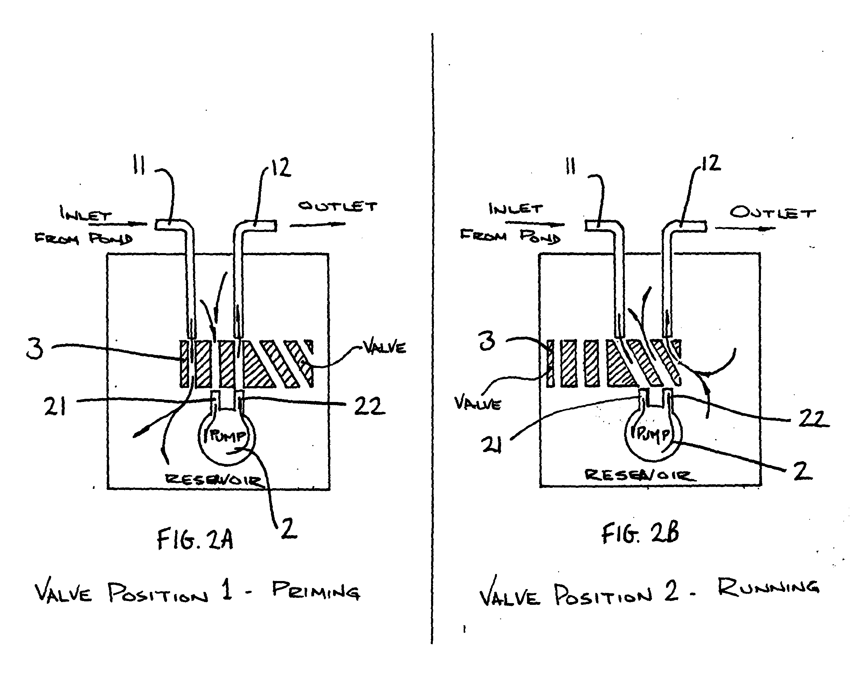

Within the container 1 there is disposed a pump 2 which is used for drawing water into the container inlet 11 and similarly causing water to leave the container via the container outlet 12. The effect of operating the pump 2 is controlled by a priming (or changeover) valve 3 which is only very schematically shown in Figure 1 and which is described in more detail below with reference to Figures 2A and 2B.

Also within the container 1 is a dividing wall 1c which separates the main volume inside the container 1 into two distinct portions. In a first of the portions, which is shown on the left hand side of Figure 1, there is provided a pair of perforated plates 4 between which is disposed a mechanical filter 5 such as a block of foam. Below the lower perforated plate 4 (when the unit is in the orientation shown in Figure 1) there is provided a biological filter 6 which may typically comprise a plurality of filter media on which biological filter growth can develop.

On the other side of the dividing wall 1c there is provided an ultraviolet lamp and associated electrical circuitry 7 which provide UV filtering.

A polishing filter 8 is also provided in the region of the lamp 7 to give final filtering of the water.

As is indicated by the arrows in Figure 1, in general terms pond water entering the container 1 will progress through the mechanical filter 5, then the biological filter 6 and then pass the UV filter 7 before finally passing through the polishing filter 8 and exiting from the container 1 via the outlet 12. The dividing wall 1c helps to ensure that this path is followed by pond water flowing through the container 1.

The present pond filter unit has two distinct states or modes of operation. The first of these is a priming state which is used when the pond pump filter unit is first set running and the other is a normal state which can be entered after the primary operation is complete. The flow path through the container in these two states is controlled by the changeover valve 3 as will now be described in more detail with reference to Figures 2A and 2B.

In the priming state, illustrated in Figure 2A the object is to draw air out of the hose which is connected to the container inlet 11 so that pond water may be drawn out of the pond and into the container 1 for filtering.

So that use of a specialised pump (which can pump air as well as water) is avoided, in the priming state, an inlet 21 to the pump 2 is connected to the interior of the container 1. In particular, the pump inlet 21 is connected to the interior of the container via a priming inlet tube portion (not shown) which serves to allow the pump 2 to directly draw water from the region towards the base of the container 1 (the bottom of the container 1, when in the orientation as shown in Figure 1, which corresponds to the normal operating orientation of the unit). Furthermore, an outlet 22 of the pump 2 is connected to the outlet 12 of the container directly so that when the pump 2 is operated, water in the container 1 is pumped out of the container 1 by the pump 2 via the outlet 12. As this occurs there is a reduction in pressure inside the container 1 (as this is sealed) and this serves to draw air and then water from the supply hose connected to the inlet 11. This mode of operation is continued until all or substantially all of the air is drawn out of the supply hose and water begins to be pumped from the pond into the pond pump filter unit.

Once this process has been completed the changeover valve 3 may be moved from the position shown in Figure 2A to the position shown in Figure 2B. Here the pump inlet 21 is connected directly to the container inlet 11 via a suitable flow passageway in the changeover valve 3 and the outlet 22 of the pump 2 is connected to the main interior volume of the container 1, in particular that region just above the upper perforated plate 4 (with the unit in the orientation shown in Figure 1). At the same time the container outlet 12 is also connected to the main volume in the container 1, in this case in the region adjacent the exit of the polishing filter 8. Thus it will be seen that in this normal operating state water is drawn in through the container inlet 11 by the pump 2 and then output so as to pass through the mechanical filter 5, biological filter 6, UV filter 7 and polishing filter 8 before leaving via the container outlet 12.

It will be appreciated that in the drawings the changeover (priming) valve 3 is shown in schematic form only and it will also be appreciated that many forms of valve may be used in practice provided that this priming function can be achieved. As an example, the changeover valve 3 may be manually operable by a user to move between the priming and running states as shown in Figures 2A and 2B. Alternatively, the changeover valve 3 may be automatically operated. This automatic operation may be triggered by sensing flow of water through the inlet 11 as this begins, by monitoring the water level in the container 1, by monitoring pressure within the container 1, or perhaps some combination or sub-combination of these measurements.

It should be noted that in the arrangement described above, once normal operation is achieved, the container 1 is positively pressurised. This overcomes the problem of running in a suction mode where the reduction in pressure can cause air in the water to come out of suspension in the container 1 which could eventually stop the pump 2 from working.

It will also be noted that the available volume of water in the container 1 determines the volume of supply hose that can be primed. That is to say this internal volume of the container, determines how long a length of hose with a given cross sectional area may be used with this priming method and thus how far the pond pump filter unit may be disposed from the pond.

As may be clear implicitly from the above specific description, when the pond pump filter unit is first to be used, the top portion 1a of the container 1 is removed and the main part 1b of the container 1 is filled with water either from the pond or via some other means. The top portion 1a is then reunited with the bottom portion 1b to create the sealed container 1. Once in this state the changeover valve 3 is moved to the priming position (as shown in Figure 2A) and the pump 2 operated to draw water up the supply hose (not shown) from the pond to the container inlet 11. Then as described above, once priming is complete, the changeover valve 3 may be switched to normal running position (as shown in Figure 2B) and the filter left to perform its function.

In the above described embodiment, the main internal volume of the container 1 in which the filtering elements are provided is used as the reservoir for performing the priming operation. In alternatives however, a separate reservoir of water might be provided for the purposes of priming the system. Thus, for example some sub-part of the main internal volume of the container 1 may be used for priming purposes. It will be clear however, that the reservoir is separate from the body of water, ie pond, from which water is to be drawn for filtering. In the present device the pump may be positioned away from and above the level of water which is to be pumped and filtered. The whole unit may be out of and above the level of the water to be processed. Further the pump, filter(s), and reservoir are all provided within a common housing. The unit as a whole is suitable for standing by a pond - it is free standing. The container inlet and outlet are arranged to be connected to hoses for drawing water from and returning water to a pond.

Although in the present embodiment, mechanical filtration, biological filtration, UV filtration and polishing filtration are all provided, in alternative units, only some of these filtration facilities may be provided or even in some cases no filtration may be provided. A system which included no filtration might be used if, for example, it was desired to create a waterfall or other water feature and it was desired to not have a pump disposed within the pond.

It will be noted that with the changeover valve 3 in the priming position as shown in Figure 2A it might be said that the outlet of the pump 22 is directly connected to the outlet 12 of the container 1. Similarly, in the running position as shown in Figure 2B, it can be said that the inlet 11 of the container 1 is connected directly to the inlet 21 of the pump 2. This expression of direct connection used in this context refers to the situation where there is a connection between the inlet or outlet of the container and the pump which is not via the main volume within the container 1. Thus, such a direct connection does not preclude the inclusion of pipes, valves or other intermediate components between the pump and the respective inlet/outlet but rather implies that there is a dedicated flow path between the pump and respective inlet/outlet.

## Claims

1. A pond pump unit arranged to operate when disposed out of a pond and comprising, a container for pond water having an inlet and an outlet, and a pump for drawing pond water from a pond in which the unit is not disposed into the inlet and driving pond water out of the outlet.

2. A pump unit according to claim 1, which is a pond pump filter unit in which at least one filter means is provided in the container and which further comprises a reservoir portion and a changeover valve means for controlling the effect of operation of the pump,
the changeover valve means having a priming state and a normal operation state,
wherein the changeover valve means is arranged so that when the changeover valve means is in the priming state, an inlet to the pump is connected to the reservoir portion of the container so that the pump is operable to pump water out of the reservoir portion via the container outlet, an outlet of the pump is connected via a flow passageway to the outlet of the container, and the inlet of the container is connected to the interior of the container so that air and/or pond water may be drawn into the interior of the container as pond water is pumped out of the container outlet.

3. A pump unit according to claim 2 wherein the changeover valve means is arranged so that when the changeover valve means is in the normal operation state, an inlet to the pump is connected via a flow passageway to the inlet of the container so that the pump is operable to pump water into the container via the container inlet.

4. A pump unit according to claim 2 or 3 which is arranged so that when in the normal operation state, an outlet of the pump is connected to the interior of the container, so that flow out of the pump passes through the main volume of the container.

5. A pump unit according to any one of claims 2 to 4 wherein the changeover valve means is manually operable.

6. A pump unit according to any one of claims 2 to 4 wherein the changeover valve means is automatically operable.

7. A pump unit according to claim 6 wherein the changeover valve means is arranged to automatically switch between the priming state and normal operation state in dependence on at least one of: a characteristic of flow from the container inlet, such as the detection of pond water flow rather than air flow, the water level in the container and the pressure in the container.

8. A pump unit according to any one of claims 2 to 7 which further comprises a priming inlet tube portion which at least partially defines a flow passageway from a region at a base of the container to the pump for use in supplying pond water from the container to the pump when the valve means is in the priming state.

9. A pump unit according to any preceding claim wherein the container is sealed, in operation, against the escape of water from the container, allowing pressurisation of the system when in use.

10. A pump unit according to any preceding claim wherein the pump is disposed within the container.

11. A pump unit according to claim 2 or any one of claims 3 to 10 when dependent on claim 2 wherein the reservoir portion comprises at least part of the main volume of the interior of the container.

12. A pump unit according to claim 1 which is a pond pump filter unit in which at least one filter means is provided in the container.

13. A pump unit according to any one of claims 2 to 12 wherein the container houses at least one of: a mechanical filter; a biological filter; and an ultra violet filter.

14. A pump unit according to any preceding claim wherein the pump is a self-priming pump.

15. A method of operating a pond pump unit according to claim 2 or any one of claims 3 to 14 when dependent on claim 2 where the container inlet is connected to a pond via a supply hose, the method comprising the steps of filling the container with water, setting the changeover valve to the priming state, operating the pump to pump water out of the container at least until air in the supply hose has been pumped out of the hose and into the container, and then setting the changeover valve to the normal operating state.

16. A pond installation comprising a pond and a pond pump unit according to any one of claims 1 to 14 disposed externally to the pond and arranged to extract water from the pond and return water to the pond without relying on a gravity feed.

17. A method of circulating water from a pond comprising the step of using a pond pump unit according to any one of claims 1 to 14, without relying on a gravity feed.
